# EUROPEAN PATENT SPECIFICATION

(11) **EP 0 426 313 B1**
(45) Date of publication and mention of the grant of the patent: **19.01.1994**
(21) Application number: 90311036.9
(22) Date of filing: 09.10.1990
(51) Int. Cl.: C03B 9/40, F15B 15/14, F15B 15/06

(54) **Moving means for use in a glassware forming machine**
Bewegungseinrichtung zur Verwendung in einer Glasformmaschine
Moyens de mouvement utilisés dans une machine de formage de verre

(30) Priority: 01.11.1989 GB 8924627
(43) Date of publication of application: 08.05.1991
(73) Proprietor: Emhart Glass Machinery Investments Inc., Wilmington, Delaware 19801 (US)
(72) Inventor: Nebelung, Hermann Heinrich, W-2090 Winsen/Luhe (DE); Borgmann, Hans, W-4923 Extertal (DE)
(74) Representative: Randall, John Walter

(56) References cited:
- EP-A- 0 117 628
- DE-B- 2 538 288
- US-A- 3 586 494
- US-A- 3 630 709
- US-A- 4 582 522

## Description

This invention is concerned with moving means for use in a glassware forming machine for moving an operative member such as a blowhead, funnel or a baffle.

In a glassware forming machine of the so-called 'individual section' type, the need arises to move certain operative members between out of the way positions and operative positions in which the operative member is aligned with an opening of a mould cavity of the machine. For example the machine comprises a blank mould in which parisons are formed and it is necessary to move a funnel into alignment with the mould opening so that it can guide a gob of molten glass into the mould cavity and then into an out of the way position to allow a baffle to be positioned on the mould. The same situation arises with regard to the baffle in relation to the blank mould and with regard to a blowhead in relation to a blow mould in which the parisons formed in the blank mould are blown into containers by air supplied through the blowhead.

Conventional moving means for moving such an operative member in an individual section type machine comprises a piston and cylinder assembly having a vertically extending piston rod which projects in both directions from a piston. One end position of the piston rod carries a horizontally extending arm on which the operative member is mounted. The other end of the piston rod carries a cam which is engaged in a spiral cam track. The arrangement is such that, when the piston and cylinder assembly is operated, the piston rod moves vertically causing the operative member to move vertically. As this movement takes place the cam track causes the piston rod to turn about its longitudinal axis thereby swinging the arm and the operative member about this axis. The operative member is thus moved in a movement which has a rotary component about the longitudinal axis of the rod and a linear component in a vertical direction.

Moving means of the above type are shown for example in US.3,630,709, U.S.3,986,858 and US.4,120,683.

Moving means of the above type suffer from certain disadvantages. The rotary movement requires that the piston shall rotate in its cylinder, which because of the peripheral seal of the piston causes substantial frictional forces. These forces tend to cause wear on the cam and the cam track, resulting in loss of precision of movement and alignment of the operative member, and also in increased use of power for achieving the necessary movements.

The invention provides moving means for use in a glassware manufacturing machine for moving an operative member between an out-of-the-way position and an operative position in alignment with an opening of a mould cavity, the operative member making a movement which has a rotary component about a vertical axis and a linear component in a vertical direction, the moving means comprising a horizontally extending arm on which the operative member is mounted, a shaft which extends vertically and on which the arm is mounted, a piston and cylinder assembly comprising a piston secured to the shaft and a vertically extending cylinder in which the piston is movable to impart a vertical linear component of movement to the shaft and thus to the operative member, and cam means for causing rotation of the shaft to provide a rotary component of movement to the operative member
characterised in that the piston is secured to the shaft against relative axial movement but free to rotate about the shaft.

The present invention will become more clear from the following description, to be read with reference to the accompanying drawings, of a moving means selected to illustrate the invention by way of example.

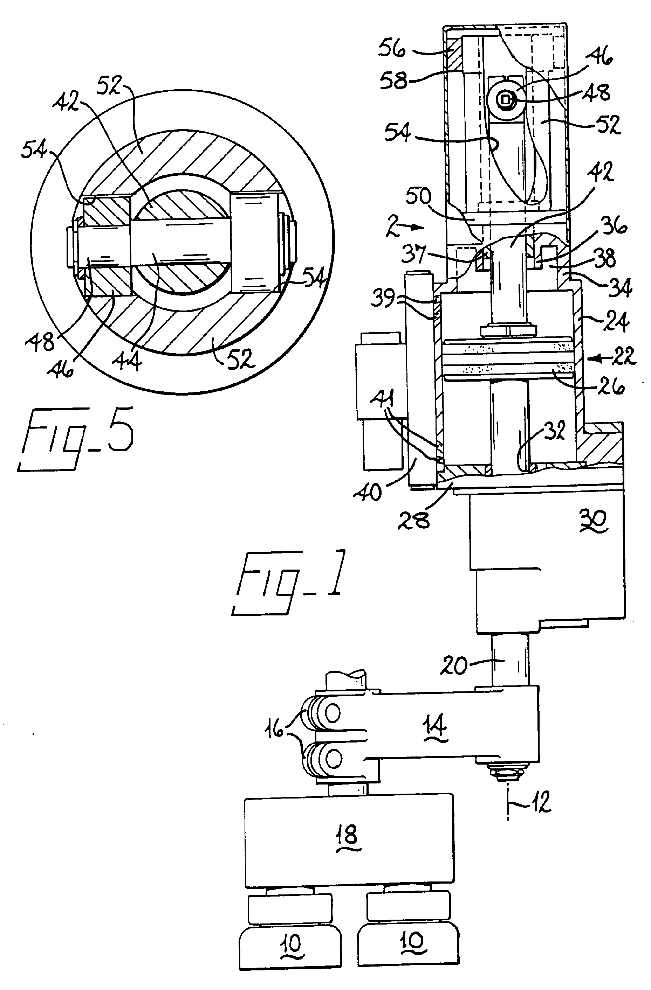

In the accompany drawings:-
Figure 1 shows a general view of the illustrative moving means with some parts broken away;

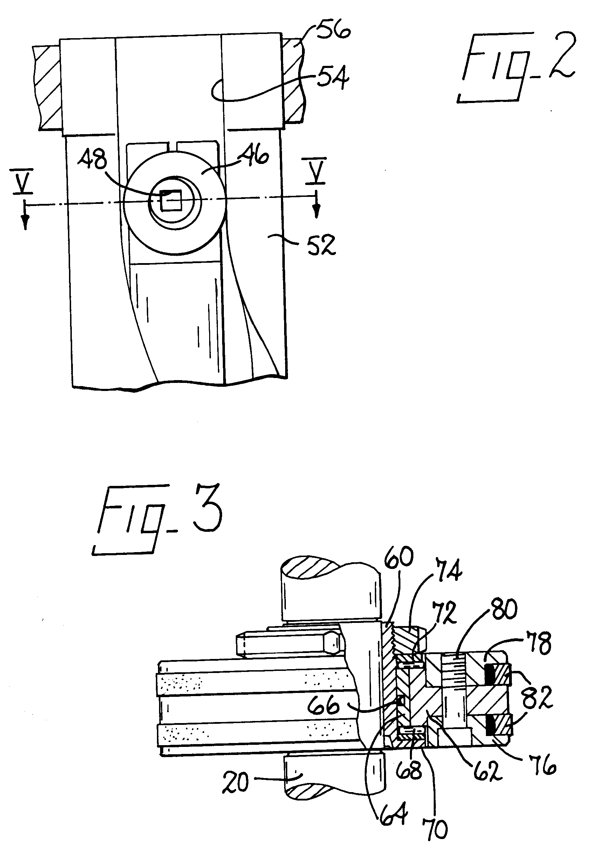

Figure 2 shows an enlarged view of part of the illustrative moving means;
Figure 3 shows, partly in section, a piston of the illustrative moving means;
Figure 4 shows an alternative construction of piston;
Figure 5 shows a section taken along V-V of Figure 2.

The illustrative moving means 2 is for use in a glassware manufacturing machine of the individual section type for moving an operative member, in the form of a holder 18 supporting two blowheads 10, between an out-of-the-way position and an operative position. When the blowheads 10 are in their operative position they are each in alignment with an opening in a mould cavity and can be utilized to blow air into the mould cavity to cause a glass parison positioned in the mould cavity to expand to the shape of the cavity.

In moving from its only out-of-the-way position to its operative position the holder 18, carrying the two blowheads 10 makes a movement which has a rotary component about a vertical axis 12 and a linear component in a vertical direction. The rotary component comprises a swinging movement of the holder 18 about the axis 12 of between 50° and 70°.

Although the illustrative moving means 2 is shown for use in moving the blowheads 10, modification of the moving means in which the rotary component is between 50° and 60°, e.g. about 55° about a vertical axis can be used for moving a funnel or a baffle of an individual section type machine. In the case of a funnel, when the funnel is in an operative position, it is arranged to guide a gob of molten glass into a mould cavity. In the case of a baffle the baffle is arranged, when in its operative position, to close an opening in a mould cavity and to provide a surface against which a gob of glass within the mould cavity can be formed into a parison.

The moving means 2 comprises a horizontally extending arm 14 which extends from the axis 12 and comprises a clamp 16 by which the holder 18 is clamped to the arm 14. A vertical shaft 20 extends with its longitudinal axis along the axis 12 and the arm 14 is rigidly secured to a lower end portion of the shaft 20.

The illustrative mechanism comprises a piston and cylinder assembly 22 which comprises a vertically extending cylinder 24 and a piston 26 which is secured to the shaft 20 against axial movement relative to the shaft but is free to rotate on the shaft 20 about the axis 12. The cylinder 24 is closed at its lower end portion by a cap 28 supported by a bracket 30, the shaft 20 passing through a bore 32 in the cap 28. At its upper end portion the cylinder 24 is closed by a cap 34 which comprises a central sleeve 36 in a recessed portion 38 of the cap, and the shaft 20 passes through a bearing 37 positioned in the sleeve 36. A seal in the bore 32 and the bearing 37 prevent the passage of air past the shaft 20 out of the cylinder 24.

It will be seen that, where in the operation of the illustrative mechanism, air is admitted below the piston 26 into the cylinder 24, the piston is moved upwards, thus to carry the arm 14 and the blowheads 10 vertically upwards, and when it is admitted into the cylinder 24 above the piston 26 corresponding downward movement of the arm 14 takes place. As is customary, a cushioning effect is obtained on movement of the piston 26 by having two passages 39 on one side of the piston 26 and two passages 41 on the other side of the piston 26 through which air may be exhausted from the cylinder 24 on either side of the piston 26. Passage of air into and out of the cylinder 24 through the passages 39 and 41 is controlled by a shuttle valve 40.

Above the cap 34 an extension 42 of the shaft 20 carries towards its upper end portion a cross shaft 44. The shaft 44 comprises eccentric end stub shafts 48 on which are supported rollers 46. The shaft 44 is lockable in position in the extension 42 by a locking screw (not shown). Rotation of the shaft 44 allows for fine adjustment of the position of the rollers 46 with respect to the axis of the cross shaft 44.

A spacer plate 50 is secured to the cap 34 and has fixed to it a cam member 52, which is generally annular in cross section and comprises two diametrically opposed cam tracks 54. The rollers 46 are arranged to run in these cam tracks, and thus movement of the shaft 20 in its vertical stroke causes rotation of the shaft 20 through approximately 60°. It will be understood that the rollers may be adjusted so that they run against the tracks 54 without unnecessary clearance. The cam member 52 is surrounded towards its upper end position by a supporting ring 56, which prevents any distortion of the member 52 and thus of the cam tracks 54. A cylindrical guard 58 surrounds the ring 56 and member 52 and is secured to the cap 34.

It will be seen that by adjustment of the eccentric pins 48, the end position (in a radial sense) of the shaft 20 may be finely adjusted, if necessary to compensate for wear of the cam track 54 and/or the rollers 46 in use of the mechanism.

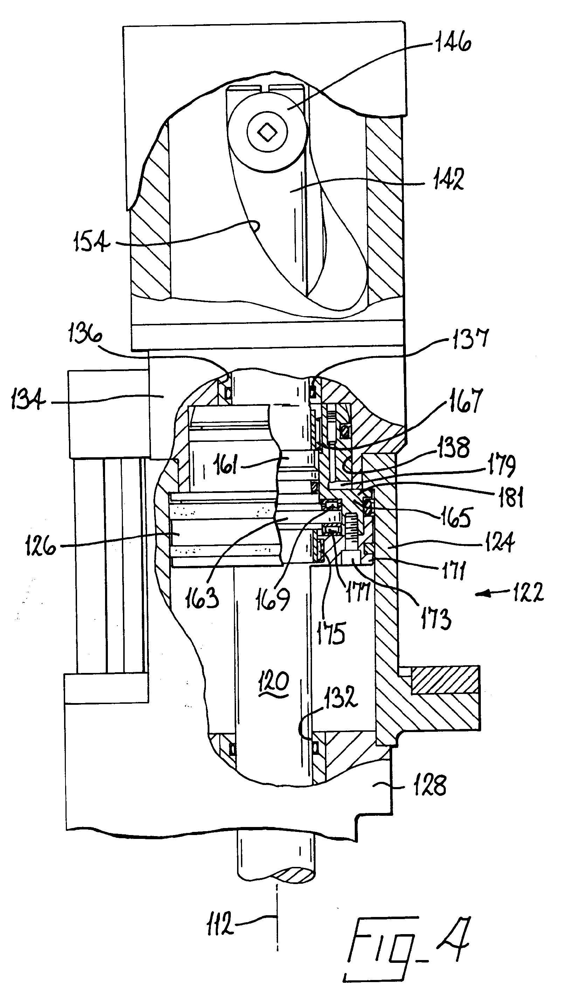

The piston 26 is free to rotate on the shaft 20. A bushing 60 (Figure 3) is welded to the shaft 20. A main piston member 62 is positioned on the bushing 60 by a further bushing 64: a sealing ring 66 prevents the passage of air between the bushings 60 and 64. A needle bearing 68 is positioned between the member 62 and bushing 64 and a flange 70 of the bushing 60, a second needle bearing 72 is positioned between the member 62 and bushing 64 and a self-loading collar 74 screwed onto the bushing 60. Annular rings 76, 78 are secured to opposite faces of the member 62 by screws 80, and sealing rings 82, 82 are clamped between the member 62 and the rings 76 and 78 and serve to seal the piston 26 against the cylinder 24 to prevent passage of air past the piston. It can be seen that the shaft 20 and the bushing 60 secured to it can rotate with respect to the piston member 62.

An alternative construction of the mechanism is shown in Figure 4, which differs primarily in the construction of the piston.

The alternative mechanism comprises a piston and cylinder assembly 122 which comprises a vertically extending cylinder 124 and a piston 126 secured to a shaft 120 against axial movement relative to the shaft but free to rotate on the shaft about its axis 112. The cylinder 124 is closed at its lower end portion by a cap 128, the shaft 120 passing through a bore 132 in the cap 128. At its upper end portion the cylinder 124 is closed by a cap 134 secured to the cylinder 124 and comprises a recessed portion 138 and a bore 136, the shaft 120 passing through a bearing 137 in the bore 136.

As in the operation of the previously described illustrative mechanism, when air is admitted below the piston 126 into the cylinder 124, the piston is moved upwardly, and when it is admitted into the cylinder 124 above the piston 126, downwardly.

Above the cap 134 an extension 142 of the shaft 120 carries an arrangement identical with that described for the illustrative mechanism, including rollers 146 running in cam tracks 154.

The piston 126 is free to rotate on the shaft 120. Two bushings 161, 163 are welded to the shaft 120. A first piston member 165 is mounted on one side of the bushing 163, and needle bearing 167, 169 allow free rotation of the member 165 about the shaft 120. A second piston member 171 is mounted on the other side of the bushing 163 secured to the member 165 by screws 173, needle bearing 175, 177 allowing free rotation of the member 171, and thus of both the members 171 and 165 together, around the shaft 120.

The first piston member 165 is provided with an air passage 179 extending from an upper face of the piston member 165 to adjacent a portion 181 of the member 165 of increased diameter. As can be seen from the drawing, the piston member 171 and the increased diameter portion 181 of the member 165 fit closely into the bore of the cylinder 124. The main portion of the piston member 165 fits closely into the recessed portion 138 of the cap 136. Seals are provided to prevent seepage of air between the piston and the respective walls of the cylinder 124 and the cap 136.

It will be seen that as the piston 126 nears the upper end of its stroke, the piston member 165 enters into the recessed portion 138, and air above the portion 181 of the member 165 is forced through the air passage 179, thus providing a controlled cushioning effect for the piston 126.

From the foregoing it will be understood that in both described mechanisms on admission of air into the cylinder 24 (124) above the piston 26 (126), the shaft 20 (120) is forced to move downwards and at the same time, by the movement of the roller 46 (146) in the cam tracks 54 (154) to rotate. The piston 26 (126) does not rotate, the shaft 20 (120) rotating in the piston.

The illustrative mechanisms can, as will be understood, be adapted for use with the movement of parts of glass mechanisms other than blowheads, for example funnels and baffles. Further the advantages of the mechanism are apparent whatever the component is that is being moved. The fact that the piston 26 (126) does not rotate with the shaft 20 (120) decreases the frictional forces and minimizes wear of the cylinder wall 24 and of the cam track 54 (154) and the rollers 46 (146). Should wear occur of the cam track 54, adjustment of the position of the rollers 46 (146) by the eccentric pins 48 (not shown) enables such wear to be compensated for.

## Claims

1. Moving means for use in a glassware manufacturing machine for moving an operative member between an out-of-the-way position and an operative position in alignment with an opening of a mould cavity, the operative member making a movement which has a rotary component about a vertical axis (12, 112) and a linear component in a vertical direction, the moving means comprising a horizontally extending arm (14) on which the operative member is mounted, a shaft (20, 120) which extends vertically and on which the arm is mounted, a piston and cylinder assembly comprising a piston (26, 126) secured to the shaft (20, 120) and a vertically extending cylinder (24, 124) in which the piston (26, 126) is movable to impart said vertical linear component of movement to the shaft (20, 120) and thus to the operative member, and cam means for causing rotation of the shaft (20, 120) to provide said rotary component of movement to the operative member
characterised in that the piston (26) is secured to the shaft (20) against relative axial movement but free to rotate about the shaft.

2. Moving means according to Claim 1 wherein the cam means comprises two rollers mounted on a transverse shaft (44) mounted in the shaft (20), and arranged to run in cam tracks (54) mounted on opposite sides of the shaft (20).

3. Moving means according to Claim 2 wherein the transverse shaft (44) is provided with two eccentric stub shafts (48) by adjustment of which a fine adjustment of the position of the rollers (46) in the cam tracks (54) may be obtained.

## Patentansprüche

1. Bewegungseinrichtung zur Verwendung in einer Glaswarenfertigungsmaschine zum Bewegen eines Betriebsteiles zwischen einer Seitposition und einer Betriebsposition in Ausrichtung mit einer Öffnung eines Gießformhohlraumes, wobei das Betriebsteil eine Bewegung ausführt, die eine rotatorische Komponente um eine vertikale Achse (12, 112) und eine lineare Komponente in einer vertikalen Richtung hat, wobei die Bewegungseinrichtung aufweist:
einen horizontal sich erstreckenden Arm (14), an dem das operative Teil montiert ist, eine Welle (20, 120), die sich vertikal erstreckt und an der der Arm montiert ist, eine Kolben- und Zylinderbaugruppe, die einen an der Welle (20, 120) befestigten Kolben (26, 126) und einen vertikal sich erstreckenden Zylinder (24, 124) aufweist, in der der Kolben (26, 126) bewegbar ist, um der Welle (20, 120) und somit dem Betriebsteil eine vertikale lineare Komponente der Bewegung zu verleihen, und eine Nockeneinrichtung zum Bewirken einer Rotation der Welle (20, 120), um dem operativen Teil die rotatorische Komponente der Bewegung bereitzustellen,
**dadurch gekennzeichnet**, daß
der Kolben (26) an der Welle (20) gegen relative axiale Bewegung, jedoch frei zum Drehen um die Welle befestigt ist.

2. Bewegungseinrichtung gemäß Anspruch 1, wobei die Nockeneinrichtung zwei Rollen aufweist, die an einer Querwelle (44) befestigt sind, die in der Welle (20) montiert ist, und die angeordnet sind, um in Nockenführungen (54) zu laufen, die an gegenüberliegenden Seiten der Welle (20) montiert sind.

3. Bewegungseinrichtung gemäß Anspruch 2, wobei die Querwelle (44) mit zwei exzentrischen Flanschwellen (48) versehen ist, durch deren Einstellung eine Feineinstellung der Position der Rollen (46) in den Nockenführungen (54) erhalten werden kann.

## Revendications

1. Moyens de déplacement destinés à être utilisés dans une machine à façonner du verre, pour déplacer un élément actif ou travaillant entre une position effacée et une position de travail en alignement avec une ouverture d'une cavité de moule, l'élément travaillant décrivant un mouvement qui a une composante rotative autour d'un axe vertical (12, 112) et une composante linéaire dans une direction verticale, les moyens de déplacement comprenant un bras (14) qui s'étend horizontalement et sur lequel l'élément travaillant est monté, un arbre (20, 120) qui s'étend verticalement et sur lequel le bras est monté, un ensemble à piston et cylindre comprenant un piston (26, 126) fixé à l'arbre (20, 120) et un cylindre (24, 124) qui s'étend verticalement et dans lequel le piston (26, 126) peut se déplacer pour imprimer cette composante de mouvement linéaire verticale à l'arbre (20, 120) et, de ce fait, à l'élément travaillant, et des moyens à came servant à déterminer une rotation de l'arbre (20, 120) pour engendrer cette une composante rotative de mouvement de l'élément travaillant, ces moyens étant caractérisés en ce que le piston (26) est fixé à l'arbre (20) de manière à être immobilisé à l'encontre du mouvement axial relatif mais à être libre de tourner autour de l'arbre.

2. Moyens de déplacement selon la revendication 1, dans lesquels les moyens à came comprennent deux galets montés sur un arbre transversal (44) lui-même monté dans l'arbre (20) et agencé pour rouler dans des pistes de came (54) montées de part et d'autre de l'arbre (20).

3. Moyens de déplacement selon la revendication 2, dans lesquels l'arbre transversal (44) est muni de deux tourillons excentriques (48) par l'ajustement desquels on peut réaliser un réglage fin de la position des galets (46) dans les pistes de came (54).
